# EUROPEAN PATENT SPECIFICATION

(11) **EP 3 165 569 B1**
(45) Date of publication and mention of the grant of the patent: **16.09.2020**
(21) Application number: 14896670.8
(22) Date of filing: 12.12.2014
(51) Int. Cl.: C08J 5/24, C08J 5/04, C08L 61/06, C08L 63/10, C08J 9/04

(54) **PREPREG AND FIBRE-REINFORCED COMPOSITE FOAM MATERIAL**
PREPREG UND FASERVERSTÄRKTES VERBUNDSTOFFSCHAUMMATERIAL
PRÉ-IMPRÉGNÉ ET MATÉRIAU DE MOUSSE COMPOSITE RENFORCÉ PAR DES FIBRES

(30) Priority: 01.07.2014 CN 201410309774
(43) Date of publication of application: 10.05.2017
(73) Proprietor: Tang, Diyuan, Jinan, Shandong 250204 (CN)
(72) Inventor: LI, Zhifang, Zhangqiu Jinan Shandong 250204 (CN)
(74) Representative: Maiwald Patent- und Rechtsanwaltsgesellschaft mbH
(86) International application number: PCT/CN2014/093671
(87) International publication number: WO 2016/000419

(56) References cited:
- CN-A- 102 382 079
- CN-A- 102 718 945
- CN-A- 103 160 067
- CN-A- 103 304 949
- CN-A- 104 045 972
- DE-A1-102005 060 744
- JP-A- S 606 757

## Description

### FIELD OF THE INVENTION

The invention relates to the field of material, particularly, the field of polymer composite material, more especially the field of fibre-reinforced composite foam material, and its production method.

### BACKGROUND OF THE ART

Fibre-reinforced composite materials are lightweight and have excellent mechanical properties such as strength and stiffness. As a result, they are widely used as aircraft components, spacecraft components, automobile components, railway vehicle components, watercraft components, sporting equipment components, and computer components such as a housing of a notebook computer. The demand for such materials are increasing year by year.

Fibre-reinforced composite materials are obtained by impregnating reinforcing fibres with a thermosetting matrix resin, and drying to provide prepreg performs, and then molding by hot pressing. The selection of the matrix resin is vital to the performances of the composite materials. Among the thermosetting resins, epoxy resins, polyurethane resins, polyester resins and the like which have good thermal resistance, elastic modulus, and chemical resistance, as well as minimal cure shrinkage once were the major choice of the matrix resin. However, these resins are flammable, and thus the safety of the materials are affected. Currently, one major choice is to use a formaldehyde based resin as a main material in order to reduce flammability. Because of the high brittleness of the formaldehyde based resin, it is often modified by epoxy and the like.

Since conventional epoxy resins have high viscosity, it is necessary to add a great amount of a dilution solvent, for example organic solvent and water for formulating an impregnation resin. During the hot pressing process, those solvents volatilize out in the form of gas, but the hot pressing process itself is not in favour of the escape of such volatiles. One approach is to impregnate part of reinforcing fibres with the impregnation resin. As a result, the portions unimpregnated with the reinforcing fibres within the prepreg perform become gas passages, which enables the air trapped during laying up and volatile components that come from the prepreg perform to be released from the prepreg perform, even when only vaccum pump and oven are used for processing without using a high pressure equipment. However, the composite materials obtained in this way exhibit lower impact strength.

CN103304949A discloses a thermosetting resin com position, and a prepreg and a laminate produced using the same. The composition comprises: (a) 5 to 80 parts by weight of a modified epoxy resin; (b) 5 to 80 parts by weight of a curing agent; (c) 0 to 50 parts by weight of a flame retardant; (d) 0 to 100 parts by weight of inorganic filler; (e) 0 to 5 parts by weight of a curing accelerator: The modified epoxy resin is prepared as follows: an unsaturated monomer containing double bonds is added to the epoxy resin, heated to 30-60° C., and stirred well; Then, the temperature is raised to 60-150° C. and the reaction is performed for 2-8 hours. In the epoxy resin composition of this document, a polymer having a low-polarity unsaturated double bond structure in its molecular structure can be used as a modifier to participate in the curing reaction of an epoxy resin.

Therefore, there remains in the art such a conflict needed to be solved: (1) If a impregnation resin with a high solid content is used, the viscosity of the resin is too high, thus it is more diffuclt to accomplish the impregnation process successfully. Besides, since too much resins are applied, although certain mechanical strengths (e.g., impact strength, compression strength) of the products are increased, a lightweight product could hardly be obtained. (2) If the impregnation process is optimized by incorporating a large amount of a solvent, not only environment pollution and solvent waste are caused, but also the mechanical strength of the material is reduced with the escape of volatile components during hot pressing process (probably because gas passages are formd during the processing or the resin is adhered at a too little amount).

There therefore remains a need in the art for a matrix resin for using in fibre-reinforced composite materials which has a low enough viscosity and a strong enough bonding force, such that the impregnation resin could easily impregnate onto reinforcing fibres without the need for incorporation of a solvent at a large amount, and the resultant composite materials possess a desirable mechanical strength.

### SUMMARY OF THE INVENTION

One object of the present invention is to solve the problem in the art that the impact strength and bending strength of fibre-reinforced composite materials are unsatisfactory as a result of the selection of a matrix resin.

A further object of the present invention is to solve the problem in the art that a large amount of volatile components are generated during the hot pressing as a result of the selection of matrix resin.

A further object of the present invention is to introduce renewable resources in the production of fibre-reinforced composite materials in order to reduce the consumption of petroleum derived materials.

According to a first aspect of the present invention, there is provided a prepreg of a fibre-reinforced composite foam material, which is prepared by impregnating reinforcing fibres with an impregnation material comprising a formaldehyde based resin and a foaming agent, and then drying, wherein the impregnation material further comprises an itaconic acid epoxy resin, which is synthesized from itaconic acid and an epoxy resin selected from the group consisting of a glycidyl ether type epoxy resin, a glycidyl ester type epoxy resin, a glycidyl amine type epoxy resin, a linear aliphatic epoxy resin and a cycloaliphatic epoxy resin.

In a typical embodiment, the weight ratio of the formaldehyde based resin to the foaming agent is 100:1-30, preferably 100:10-30.

In accordance with the present invention, the raw materials for producing a fibre-reinforced polymer composite foam material comprise reinforcing fibres and a formaldehyde based curable resin. In the present invention, a foaming agent having a foaming temperature of from 110 to 250 °C, preferably greater than 130 °C, e.g., 132 to 180 °C, and preferably from 135 to 160 °C, is used. As such, the selected foaming agent can foam during thermoforming without the need of acidic catalyst, which not only shortens the curing time of the resin but also avoids the corrosiveness of the catalyst towards downstream application.

In a specific embodiment of the present invention, the foaming agent is selected from the group consisting of azo compounds, carbonate salts or bicarbonate salts, and sulfonyl cyanides.

In a preferred embodiment of the present invention, the foaming agent is azodicarbonamide, preferably with an urea added.

In a specific embodiment of the present invention, the formaldehyde based resin is selected from the group consisting of urea-formaldehyde resins, phenol-formaldehyde resins, furan resins, resorcinol-formaldehyde resins and melamine-formaldehyde resins, and preferably phenol-formaldehyde resins.

In a specific embodiment of the present invention, the impregnation material further comprises plastic unexpanded microspheres comprising a shell and an expanding agent encapsulated in the shell, the thermoplastic resin preferably being polystyrene microspheres.

A second aspect of the present invention is further directed to a fibre-reinforced composite foam material produced from the above-mentioned prepreg.

Further, a surface of the fibre-reinforced composite foam material may also be complexed with other material as a protective layer or a decorative layer, selecting from glass fibre-reinforced plastics, plastic plate, metal plate, calcium silicate plate, and marble plate, etc.

Further, during the thermoforming, an additional porous material layer may also be complexed. The additional porous material layer is positioned on one side of the finished product, or between two layers of semi-finished plates.

In the present invention, since itaconic acid epoxy resin has been introduced into the raw materials for production, the viscosity of the impregnation material is reduced, which is in turn favourable for impregnating reinforcing fibres without the need for incorporation of a large amount of solvent, thus reducing the negative impact of the generated volatiles on the material performance. Additionally, since the itaconic acid epoxy resin reinforces the linear structure, the flexibility and the impact strength of the product have been improved. Meanwhile, because of the ultrastrong bonding force, the impregnation resin used in the present invention has also improved the bending strength of the product.

### DETAILED DESCRIPTION OF THE EMBODIMENTS

It is the present invention that uses for the first time the combination of a formaldehyde based resin and an itaconic acid epoxy resin to form an impregnation material, which is used to impregnate reinforcing fibres to produce an advanced composite material. The chemical name of itaconic acid is methylene succinic acid, which is a renewable resource and can be cheaply obtained by industrial fermentation of agricultural and sideline products such as starch, sucrose, molasses, sawdust, straw and the like. Using an itaconic acid epoxy resin in the inventive product may reduce the consumption of petroleum resource. Other important advantadges resulting from using the itaconic acid epoxy resin include that it has a very low viscosity and a better bonding property. As a result, when it is used as a reinforced resin, higher mechanical strength such as bending strength and impact strength is achieved at a low added amount, in comparison with the case when bisphenol A phenolic epoxy resin is used as a reinforced resin. Meanwhile, the added amount of the solvent is decreased, which has a positive effect on the cost and environment protection.

In the present invention, the itaconic acid epoxy resin is synthesized from itaconic acid and epoxy resin, wherein the epoxy resin may be selected from the group consisting of a glycidyl ether type epoxy resin, a glycidyl ester type epoxy resin, a glycidyl amine type epoxy resin, a linear aliphatic epoxy resin, and a cycloaliphatic epoxy resin. In a typical embodiment of the present invention, a glycidyl ether type epoxy resin, preferably a bisphenol A epoxy resin, is used. Based on 100 parts by mass of the epoxy resin, itaconic acid is preferably used in an amount ranging from 20 to 80 parts, e.g., 30, 40, 50, 60 parts by mass. In typical examples of the present invention, an amount of 40-50 parts is used. A polymerization inhibitor, e.g., hydroquinone is add at a proper amount to the synthetic reaction.

In a typical embodiment of the present invention, itaconic acid, a small amount of cosolvent, and hydroquinone are heated to 85 °C under an atmosphere of nitrogen, then benzyl triethyl ammonium chloride is added while a mixed liquid of an epoxy resin and a small amount of cosolvent is added dropwise at the same time, and the temperature is maintained at 85-95 °C. After the addition is complete, the temperature is raised to 100-105 °C, the reaction continues for another 2-4.5 h. When the acid value reaches the specified value, the reaction is stopped immediately. The materials are cooled below 50 °C, and an aqueous ammonia is added to neutralize to a pH value of 7-7.5, diluted with an amount of deionized water, to produce a water-soluble itaconic acid epoxy resin solution.

In formulating the impregnation material used in the present invention, based on 100 parts by mass of the formaldehyde based resin, 3-40 parts, typically 10-30 parts of itaconic acid epoxy resin can be used.

In one embodiment of the present invention, the impregnation resin further comprises a foaming agent which is a chemical foaming agent. The foaming agent thermally decomposes at a temperature of preferably from 110 to 250 °C, and more preferably from 135 to 160 °C, to generate a gas, which leads to direct foaming and avoids the use of an acidic catalyst. Suitable foaming agents for use in the present invention include azo compounds, such as azodicarbonamide, which can be processed, e.g., by adding urea, in order to reduce foaming temperature; carbonate salts or bicarbonate salts, such as sodium bicarbonate; sulfonyl cyanides, such as benzenesulfonyl cyanide. High temperature foaming agent used in the present invention avoids the use of an acidic catalyst in one hand, and the processing at a high temperature may shorten curing time of a resin in the other hand.

The formaldehyde based curable resin that can be used in the present invention is selected from the group consisting of urea-formaldehyde resins, phenol-formaldehyde resins, furan resins, resorcinol-formaldehyde resins or melamine-formaldehyde resins, and preferably phenol-formaldehyde resins because of its lower flammability. These curable resins can be solvent based resins or solvent free resins. The phenol-formaldehyde resins can be thermoplastic phenol-formaldehyde resins, and also can be thermosetting phenol-formaldehyde resins. If a thermoplastic phenol-formaldehyde resin is used, it is necessary to add phenol-formaldehyde resin cure agent, such as hexamethylenetetramine.

Web-like or flake-like fibre materals used as reinforcing fibres have a woven or nonwoven structure, and are consisted of organic or inorganic fibres (e.g., glass fibres, mineral fibres, cellulose fibres, carbon fibres). Web-like or flake-like materials have pores and loose structures, which are apt to absorb impregnation solution easily. In ordert to facilitate drying and treating monolayer semi-finished product formed after impregnating reinforcing fibres with a resin, fibrous materials may have a thickness in a range of between 0.1 and 30 mm, preferably in a range of between 0.3 and 15 mm, because too thick in size may make it difficult to impregnate. During the production of plates by thermoforming, the aforesaid several monolayers of semi-finished product plate are complexed with other desired plates. Web-like or flake-like fibrous materials have an areal weight in a range of between 20 and 6000 g/m², preferably between 30 and 3000 g/m². The fibrous materials comprise 10-80%, preferably 15-60% by weight of the semi-finished product material.

If it is necessary to improve the flexibility of the inventive composite foam material, thermoplastic expandable and/or expanded microspheres can be added to the impregnation material. The microspheres comprise a shell and an expanding agent or a foaming agent encapsulated in the shell, and the expanding agent or foaming agent provides expansion power at certain temperatures. The added amount can be determined flexibly depending on the requirement on the flexibility of the material. Suitable microspheres for the present invention are expandable and/or expanded thermoplastic microspheres, or a mixture thereof. The microspheres expand by heating to above the boiling point of the expanding agent and above the soften point of the polymer shell. Specific examples of the polymers that can be used to form the shell include various thermoplastic resin monomers like polystyrene, etc.

In order to produce the inventive product, an impregnation material is made first, which comprises at least the aforesaid formaldehyde based resin, itaconic acid epoxy resin and the preferred foaming agent. In a preferable embodiment, the aforesaid expanded or unexpanded microspheres are included. Depending on the requirements on the finished product, the ratio of the resin, foaming agent and other components in the impregnation material can be selected freely.

If desired, it is also possible to add additional auxiliary agents, e.g., a stabilizer, a filing agent, a filler, a flame retardant, or a pigment. It is also possible to add organic or inorganic particles (e.g., floating beads).

In preferred embodiments of the present invention, the impregnation material comprising a formaldehyde based resin, an itaconic acid epoxy resin, a high temperature foaming agent and thermoplastic microspheres is applied onto the web-like or flake-like reinforcing fibres by for example, immersing the web-like or flake-like fibrous materials into a vessel loaded with the impregnation material, or spraying the impregnation material onto the web-like or flake-like materials, to provide a prepreg perform which is dried to obtain a prepreg, and then the prereg is subjected to thermoform to produce the finished product.

The method for drying a semi-finished product may be selected from the methods consisting of tunnel kiln, oven, etc., microwave or infrared heating, steam or electricity heating, heat conducting oil heating and the like, and the drying temperature is preferably 90-160 °C.

In the present invention, there are a plenty of approaches of thermoforming. A typical approach is to place the multiple layers of a semiproduct material in a hot pressing equipment to undergo complex by lamination, and subject the composite materials to hot pressing treatment. Alternatively, thermoforming can, for example, be a compression moulding, a pultrusion moulding, a vacuum forming, etc. Optionally, a surface of the plate is also complexed with a plate made of other materials, such as a plate of other plastics, a metal plate, a calcium silicate plate, a marble plate, etc., as a protective layer or a decorative layer. The bonding between the layers is achieved during the hot pressing. Other molding methods can also be used, such as molding by heating in a mould. The thermoforming temperature may be in a range of between 130 and 250 °C, preferably in a range of between 132 and 180 °C. For example, in this process, the foaming agent foams, and the thermoplastic particles expand, thereby achieving the goal of weight loss.

If desired, during the thermoforming, an additional organic or inorganic composite layer can be complexed onto the semi-finished product, either on one side or both sides of the plate of the semi-finished product, or be sandwiched between two plates of the semi-finished product. It can also be complexed with a foam layer, e.g., a melamine foam, a polyurethane foam, a phenol-formaldehyde foam, and the like, in order to achieve the goal of more weight loss. The above description illustrates the morphology of the semi-finished product and finished product of the fibre-reinforced composite foam material and the production method thereof. The product according to the present invention may be a flat or compression moulded special-shaped product. The surface pattern of the plate can be diverse, which is suitable for 3D molding.

If desired, it is possible to arrange layers with different densities, and so on.

### EXAMPLES

### Example 1

A 4-neck flask equipped with a stirrer, a reflux condenser, a thermometer and a nitrogen inlet was charged with itaconic acid, a cosolvent, and hydroquinone. The reaction was heated to 85 °C, and nitrogen was passed through. Benzyl triethyl ammonium chloride was added while a mixed liquid of epoxy and a small amount of cosolvent was added dropwise over 1-1.5 h at the same time, during this period the temperature was maintained at 85-95 °C. After the addition was complete, the temperature was raised to 100-105 °C, the reaction continued for another 2-4.5 h. In the course of reaction, a sample was collected at any time for acid value. When the acid value reached the specified value, the reaction was stopped immediately. The materials were cooled below 50 °C, and an aqueous ammonia was added to neutralize to a pH value of 7-7.5, diluted with an amount of deionized water, to produce a water-soluble itaconic acid epoxy resin solution.

### Example 2

A glass fibre mat with an areal weight of 100 g/m² was impregnated into a mixture solution comprising a phenol-formaldehyde resin, expandable thermoplastic particles, an itaconic acid epoxy resin, and azodicarbonamide (the phenol-formaldehyde resin, foamable polystyrene beads, the itaconic acid epoxy resin and the azo compound were formulated at a weight ratio of 100:5:10:8 into a solution having a solid content of 40%, and the solvents were acetone and water), heated in an oven at 100 °C for 30 min., then cut into the required size, placed in a hot press, and cured for 5 min. at 180 °C to provide the desired plate.

### Comparative Example 1

A glass fibre mat with an areal weight of 100 g/m² was impregnated into a mixture solution comprising a phenol-formaldehyde resin, expandable thermoplastic particles, and azodicarbonamide (the phenol-formaldehyde resin, the foamable polystyrene beads, bisphenol A epoxy resin, and the azo compound were formulated at aweight ratio of 100:5:10:8 into a solution having a solid content of 35%, and the solvent was ethyl acetate), heated in an oven at 100 °C for 30 min., then cut into the required size, placed in a hot press, and cured for 5 min. at 180 °C to provide the desired plate.

### Comparative Example 2

A glass fibre mat with an areal weight of 100 g/m² was impregnated into a mixture solution comprising a phenol-formaldehyde resin, expandable thermoplastic particles, and azodicarbonamide (the phenol-formaldehyde resin, the foamable polystyrene beads, and the azo compound were formulated at a weight ratio of 100:5:8 into a solution having a solid content of 40%, and the solvents were acetone and water), heated in an oven at 100 °C for 30 min., then cut into the required size, placed in a hot press, and cured for 5 min. at 180 °C to provide the desired plate.

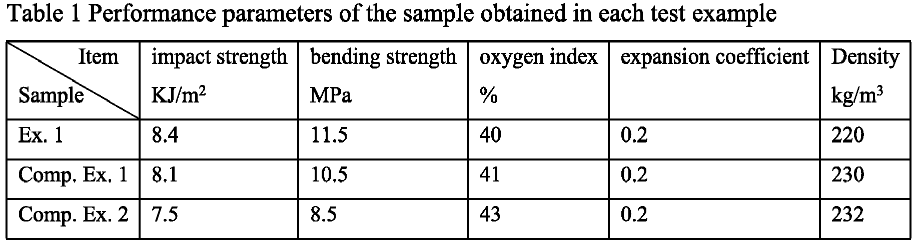

In Table 1, the impact strength was tested in accordance with ISO179; the bending strength was tested in accordance with GBT1409-2005; the expansion coefficient was tested in accordance with DIN53752; and the oxygen index was tested in accordance with GB8924-2005.

## Claims

1. A prepreg of a fibre-reinforced composite foam material, which is prepared by impregnating reinforcing fibres with an impregnation material comprising a formaldehyde based resin and a foaming agent, and then drying, **characterized in that** the impregnation material further comprises an itaconic acid epoxy resin, and the itaconic epoxy resin is synthesized from itaconic acid and an epoxy resin selected from the group consisting of a glycidyl ether type epoxy resin, a glycidyl ester type epoxy resin, a glycidyl amine type epoxy resin, a linear aliphatic epoxy resin, and a cycloaliphatic epoxy resin.

2. The prepreg of a fibre-reinforced composite foam material of claim 1, wherein the weight ratio of the formaldehyde based resin to the foaming agent is 100:1-30.

3. The prepreg of a fibre-reinforced composite foam material of claim 1, wherein the formaldehyde based resin is a phenol-formaldehyde resin or a melamine resin.

4. The prepreg of a fibre-reinforced composite foam material of claim 1, wherein the foaming agent is selected from the group consisting of azo compounds, carbonate salts or bicarbonate salts, and sulfonyl cyanides.

5. The prepreg of a fibre-reinforced composite foam material of claim 1, wherein the impregnation material further comprises plastic expandable microspheres comprising a shell formed by a thermoplastic material and an expanding agent encapsulated in the shell.

6. The prepreg of a fibre-reinforced composite foam material of claim 1, wherein the impregnation material is incorporated into a fibre-reinforced layer by spraying or impregnating or roller coating.

7. The prepreg of a fibre-reinforced composite foam material of claim 1, wherein the foaming agent has a foaming temperature of from 120 to 160 °C.

8. A fibre-reinforced composite foam material manufactured by thermoforming the prepreg of any one of claims 1 to 7.

9. The fibre-reinforced composite foam material of claim 8, wherein a surface of which is also complexed with a plate of other materials as a protective layer or a decorative layer, including a rubber sheet, a plastic plate, a metal plate, a calcium silicate plate, a marble plate, a fiber glass cloth or cotton cloth impregnated with a resin, and a foaming material.

## Patentansprüche

1. Ein Prepreg eines faserverstärkten Kompositschaummaterials, welches hergestellt wird durch Imprägnieren verstärkender Fasern mit einem Imprägnierungsmaterial umfassend ein Formaldehyd-basiertes Harz und ein Schäumungsmittel, und anschließendes Trocknen, **dadurch gekennzeichnet, dass** das Imprägnierungsmaterial ferner ein Itaconsäureepoxy-Harz umfasst, und das Itaconsäureepoxy-Harz aus Itaconsäure und einem Epoxyharz synthetisiert wird, das ausgewählt ist aus der Gruppe bestehend aus einem Glycidylethertyp Epoxyharz, einem Glycidylestertyp Epoxyharz, einem Glycidylaminetyp Epoxyharz, einem linearen aliphatischen Epoxyharz, und einem cycloaliphatischen Epoxyharz.

2. Das Prepreg eines faserverstärkten Kompositschaummaterials nach Anspruch 1, wobei das Gewichtsverhältnis des Formaldehyd-baierten Harzes zum Schäumungsmittel 100:1-30 beträgt.

3. Das Prepreg eines faserverstärkten Kompositschaummaterials nach Anspruch 1, wobei das Formaldehyd-basierte Harz ein Phenol-Formaldehydharz oder ein Melaminharz ist.

4. Das Prepreg eines faserverstärkten Kompositschaummaterials nach Anspruch 1, wobei das Schäumungsmittel ausgewählt ist aus der Gruppe bestehend aus Azoverbindungen, Carbonatsalzen oder Bicarbonatsalzen, und Sulfonylcyaniden.

5. Das Prepreg eines faserverstärkten Kompositschaummaterials nach Anspruch 1, wobei das Imprägnierungsmaterial ferner umfasst expandierbare Kunststoffmikrokügelchen umfassend eine Schale gebildet aus einem thermoplastischen Material und einem Expandierungsmittel verkapselt in der Schale.

6. Das Prepreg eines faserverstärkten Kompositschaummaterials nach Anspruch 1, wobei das Imprägnierungsmaterial in eine faserverstärkte Schicht eingebracht wird durch Besprühen oder Imprägnieren oder Walzenbeschichtung.

7. Das Prepreg eines faserverstärkten Kompositschaummaterials nach Anspruch 1, wobei das Schäumungsmittel eine Schäumungstemperatur von 120 bis 160 °C aufweist.

8. Ein faserverstärktes Kompositschaummaterial hergestellt durch Thermoformen des Prepregs nach einem der Ansprüche 1 bis 7.

9. Das faserverstärkte Kompositschaummaterial nach Anspruch 8, wobei eine Oberfläche auch mit einer Platte aus anderen Materialien als eine Schutzschicht oder eine dekorative Schicht komplexiert ist, einschließlich eines Gummiblatts, einer Plastikplatte, einer Metallplatte, einer Calciumsilikatplatte, einer Marmorplatte, eines Glasfasergewebes oder eines mit einem Harz und einem Schäumungsmaterial imprägnierten Baumwollgewebes.

## Revendications

1. Un pré-imprégné d'un matériau en mousse composite renforcé de fibres, qui est préparé en imprégnant des fibres de renforcement avec un matériau d'imprégnation comprenant une résine à base de formaldéhyde et un agent moussant, puis en séchant, **caractérisé en ce que** le matériau d'imprégnation comprend en outre une résine époxy d'acide itaconique, et la résine époxy itaconique est synthétisée à partir d'acide itaconique et d'une résine époxy choisie dans le groupe constitué d'une résine époxy de type éther glycidylique, d'une résine époxy de type ester glycidylique, d'une résine époxy de type glycidylamine, d'une résine époxy aliphatique linéaire, et d'une résine époxy cycloaliphatique.

2. Le pré-imprégné d'un matériau en mousse composite renforcé de fibres selon la revendication 1, dans lequel le rapport pondéral de la résine à base de formaldéhyde à l'agent moussant est de 100:1-30.

3. Le pré-imprégné d'un matériau en mousse composite renforcé de fibres selon la revendication 1, dans lequel la résine à base de formaldéhyde est une résine phénol-formaldéhyde ou une résine mélamine.

4. Le pré-imprégné d'un matériau en mousse composite renforcé de fibres selon la revendication 1, dans lequel l'agent moussant est choisi dans le groupe constitué par les composés azoïques, les sels de carbonate ou les sels de bicarbonate et les cyanures de sulfonyle.

5. Le pré-imprégné d'un matériau en mousse composite renforcé de fibres selon la revendication 1, dans lequel le matériau d'imprégnation comprend en outre des microsphères expansibles en matière plastique comprenant une coque formée par un matériau thermoplastique et un agent d'expansion encapsulé dans la coque.

6. Le pré-imprégné d'un matériau en mousse composite renforcé de fibres selon la revendication 1, dans lequel le matériau d'imprégnation est incorporé dans une couche renforcée de fibres par pulvérisation ou imprégnation ou par revêtement au rouleau.

7. Le pré-imprégné d'un matériau en mousse composite renforcé de fibres selon la revendication 1, dans lequel l'agent moussant a une température de moussage allant de 120 à 160°C.

8. Un matériau en mousse composite renforcée de fibres fabriqué par thermoformage du pré-imprégné selon l'une quelconque des revendications 1 à 7.

9. Le matériau en mousse composite renforcée de fibres selon la revendication 8, dont une surface est également complexée avec une plaque d'autres matériaux en tant que couche protectrice ou couche décorative, incluant une feuille de caoutchouc, une plaque de plastique, une plaque de métal, un une plaque de silicate de calcium, une plaque de marbre, un tissu en fibre de verre ou un tissu en coton imprégné de résine et un matériau moussant.
